# EUROPÄISCHE PATENTSCHRIFT

(11) **EP 1 416 185 B1**
(45) Veröffentlichungstag und Bekanntmachung des Hinweises auf die Patenterteilung: **12.11.2008**
(21) Anmeldenummer: 03015598.0
(22) Anmeldetag: 15.07.2003
(51) Int. Cl.: F16D 69/02, C04B 35/83

(54) **Faserverstärkte keramische Bremsbeläge**
Fibre-reinforced ceramic brake lining
Disque de frein céramique renforcé par des fibres

(30) Priorität: 24.07.2002 DE 10233729
(43) Veröffentlichungstag der Anmeldung: 06.05.2004
(73) Patentinhaber: AUDI AG, 85045 Ingolstadt (DE)
(72) Erfinder: Bauer, Moritz, 86153 Augsburg (DE); Hüner, Ronald Dr., 86674 Baar (DE); Winkelmann, Peter, 86672 Thierhaupten (DE)
(74) Vertreter: Deckers, Hellmuth Alexander

(56) Entgegenhaltungen:
- EP-A- 1 340 733
- DE-C- 4 220 630
- US-A- 6 051 313
- US-A- 6 079 525
- US-A1- 2001 001 189
- US-A1- 2003 134 098

## Beschreibung

Die Erfindung betrifft faserverstärkte keramische Bremsbeläge.

Herkömmliche Bremssysteme bestehen aus Bremszange, einer Scheibe aus Gußeisen oder Stahl sowie Bremsbelägen, die überwiegend mit Phenolharzen gebundene Reibmittel oder Sintermetalle enthalten. Wird die metallische Bremsscheibe durch keramische Systeme ersetzt, insbesondere durch Bremsscheiben aus C/SiC (mit Kohlenstoffasern verstärkter Keramik, deren Matrix Siliciumcarbid sowie elementares Silicium und Reste von nicht umgesetztem Kohlenstoff enthält), so erhöht sich aufgrund höherer Reibwerte, geringerer Wärmeleitfähigkeit und geringerer Wärmekapazität der Scheibe die Oberflächentemperatur der Bremsscheibe und des Bremsbelages um mindestens 200 K. Der Verschleiß herkömmlicher Bremsbeläge steigt durch die thermische Belastung stark an. Mit Phenolharz gebundene Bremsbeläge sind der thermischen Zersetzung ausgesetzt, Sintermetallbremsbeläge schmelzen an der Oberfläche auf. Diese Nachteile können vermieden werden, wenn Bremsbeläge eingesetzt werden, die den erhöhten thermischen Ansprüchen der Systeme mit keramischen Bremsscheiben gerecht werden.

Die Verwendung von faserverstärkten C/SiC-Bremsbelägen in Verbindung mit keramischen Bremsscheiben aus C/SiC ist aus der Patentanmeldung DE-A 197 27 586 bekannt. Das wesentliche Element dieser Erfindung ist die Verwendung desselben Materials für beide Reibpartner, Bremsscheibe und Belag. C/SiC-Bremsscheiben werden somit mit einem artgleichen Bremsbelag gepaart. Der Bremsbelag soll jedoch eine geringere Härte aufweisen als die korrespondierende Bremsscheibe. Dies wird dadurch erreicht, daß der C/C-Körper des Bremsbelages vor der Silicierung eine höhere Dichte aufweist als derjenige der Bremsscheibe, wodurch er nach der Silicierung einen geringeren SiC-Gehalt besitzt. Bevorzugt sind die Fasern des Bremsbelages isotrop ausgerichtet, wodurch eine gleichmäßige Wärmeleitfähigkeit quer zur Bremsfläche erzielt werden soll.

In Hochleistungsbremssystemen mit Keramikbremsscheiben und keramischen Bremsbelägen, nehmen die Beläge vergleichsweise hohe Bremsenergien auf, daraus resultiert eine erhebliche Erhitzung des Bremsbelages. Während das Belagsmaterial im allgemeinen auf hohe Betriebstemperaturen ausgelegt ist, bereitet es technische Schwierigkeiten, auch den Bremsschuh, den Belagsträger und den Bremskolben so auszuführen, daß diese hohe Betriebstemperaturen überstehen. Insbesondere führt eine längere thermische Belastung zur Überhitzung der Bremsflüssigkeit und der Elastomerringe um die Kolben.

Es ist daher Aufgabe der Erfindung, einen hochtemperaturbelastbaren keramischen Bremsbelag für Bremsscheiben insbesondere mit keramischer Reibfläche bereitzustellen, der auch bei hoher thermischer Belastung der Reibpaarung eine möglichst geringe Wärmemenge auf den Bremsbelagsträger, Bremsschuh und -kolben überträgt.

Die Lösung der Aufgabe besteht darin, daß ein Bremsbelag mit stark anisotroper Wärmeleitung bereitgestellt wird, wobei die Wärmeleitung parallel zu den Reibflächen der Bremsbeläge deutlich größer als die in der Richtung der Flächennormalen der Reibfläche ist, also senkrecht zur Fläche.

Die Erfindung betrifft daher einen mit Kohlenstoffasern verstärkten keramischen Bremsbelag mit einer Matrix, die im wesentlichen aus Siliciumcarbid, sowie Silicium und/oder Kohlenstoff aufgebaut ist, wobei als Verstärkungsfasern Langfasern eingesetzt werden, die in der Ebene parallel zur Reibfläche ausgerichtet sind, so daß sich eine stark anisotrope Wärmeleitung des Bremsbelages ergibt, und wobei bevorzugt die Wärmeleitfähigkeit senkrecht zur Reibfläche bei höchstens 50 % der Wärmeleitfähigkeit parallel zur Reibfläche liegt. Der erfindungsgemäße Bremsbelag kann dabei durch das kostengünstige Verfahren der Siliciumschmelzinfiltration von mit Kohlenstoffasern verstärkten Kohlenstoff-Körpern ("C/C-Körper") gewonnen werden.

Dabei wird von einer Ausrichtung parallel zur Reibfläche gesprochen, wenn der Mittelwert über alle Fasersegmente des zwischen der Reibfläche und jeweils einem geraden Fasersegment eingeschlossenen Winkels nicht mehr als 10°, bevorzugt nicht mehr als 5°, und insbesondere nicht mehr als 3° beträgt.

Es wird von einer Matrix gesprochen, die im wesentlichen aus Siliciumcarbid, sowie Silicium und/oder Kohlenstoff aufgebaut ist, wenn die Summe der Anteile der genannten Stoffe mindestens 50 % von der Masse der Matrix, bevorzugt mindestens 60 %, und insbesondere mindestens 70 % beträgt.

Die Erfindung betrifft weiter einen Bremsbelag aus faserverstärktem C/SiC, wobei die Verstärkungsfasern in Form von mehreren Kohlenstoffasergewebematten vorliegen, die übereinandergestapelt sind. Zur Herstellung eines derartigen Belags wird der C/C-Vorkörper bevorzugt zumindest einmal mit pyrolytischem Kohlenstoff nachverdichtet, der bevorzugt über eine Flüssiginfiltration mit einem carbonisierbaren organischen Material und anschließende Pyrolyse gebildet wird.

Die Erfindung betrifft weiter die Kombination eines derartigen Bremsbelags mit einer faserverstärkten C/SiC-Bremsscheibe.

Für den erfindungsgemäßen Bremsbelag ist eine Faserverstärkung erforderlich, die zu einer hohen Anisotropie der Wärmeleitung führt, wobei insbesondere wichtig ist, eine möglichst geringe Wärmeleitung senkrecht zur Reibfläche zu erreichen.

Als Verstärkungsfasern werden daher Langfasern aus Kohlenstoff eingesetzt, die eine höhere thermische Leitfähigkeit als die SiC, Si und C enthaltende Matrix aufweisen. Die Fasern können in bevorzugter Weise auch in Form von Bündeln vorliegen, wobei ein Bündel mindestens ca. 100 Einzelfasern umfaßt. Unter Langfasern werden hier Fasern verstanden, die eine mittlere Länge von mindestens 10 mm, bevorzugt von mindestens 30 mm aufweisen. Die Länge der Fasern ist bevorzugt in der gleichen Größenordnung wie die äußeren Abmessungen des Reibbelagskörpers. Besonders bevorzugt sind die einzelnen Fasern oder Faserbündel so lang, daß sie den Reibbelagskörper ohne Unterbrechung von der einen Seite bis zur gegenüberliegenden Seite durchqueren.

Die Anisotropie der Wärmeleitung wird dadurch eingestellt, daß die Kohlenstoffasern im wesentlichen in einer Ebene parallel zur Reibfläche ausgerichtet sind. Diese Faserausrichtung steht im Gegensatz zu der überwiegend isotropen Faserausrichtung der aus der Patentanmeldung DE-A 197 27 586 bekannten Reibbeläge und des als Reibgegenkörper bevorzugten kurzfaserverstärkten C/SiC.

Gegenüber den kurzfaserverstärkten C/SiC-Werkstoffen ist bei einem mit Langfasern verstärkten C/SiC die Wärmeleitfähigkeit in Faserrichtung daher besser, weil der Wärmetransport in dieser Richtung weniger oft durch die schlechter wärmeleitende Matrix unterbrochen wird.

Die Langfasern werden in Form von mindestens einer Lage von unidirektionalen oder multidirektionalen Gelegen, Matten, Geweben oder Geflechten eingesetzt. Im Falle von mehreren Lagen sind diese übereinandergestapelt. Diese Fasern sind im wesentlichen parallel zur Reibfläche ausgerichtet sind, so daß die Wärmeleitfähigkeit parallel zur Reibfläche höher ist als senkrecht hierzu.

Bevorzugt liegt die Wärmeleitfähigkeit des Bremsbelags parallel zur Reibfläche bei mindestens 21 W/m · K, besonders bevorzugt bei mindestens 25 W/m · K und insbesondere bei mindestens 40 W/m · K. Seine Wärmeleitfähigkeit senkrecht zur Reibfläche liegt bevorzugt bei höchstens 19 W/m · K, besonders bevorzugt bei höchstens 15 W/m · K und insbesondere bei höchstens 10 W/m · K. In einer bevorzugten Ausgestaltung der Erfindung liegt die Wärmeleitfähigkeit senkrecht zur Reibfläche bei höchstens 50 % der Wärmeleitfähigkeit parallel zur Reibfläche. Je dicker der Bremsbelag ist, desto größer ist seine Wärmekapazität, so daß er bei einem Bremsvorgang mehr Wärme aufnehmen kann. Daher können bei zunehmender Materialdicke auch höhere Absolutwerte der Wärmeleitfähigkeit in der Richtung senkrecht zur Reibfläche toleriert werden.

In einer bevorzugten Ausgestaltung der Erfindung enthält der Bremsbelag mindestens 5, besonders bevorzugt 10 bis 50 übereinandergeschichtete Lagen aus Kohlenstoffasergewebe. Die Wärmeleitfähigkeit des Bremsbelags senkrecht zur Reibfläche bei dieser Anordnung wird bevorzugt auf 4 bis 12 W/m · K eingestellt.

Reibwert und Reibkomfort des Belagsmaterials werden insbesondere durch Gehalt an SiC, Kohlenstoff und Kohlenstoffasern in der Reibfläche bestimmt. Bevorzugt werden daher Reibbeläge, in denen die oberste, der Reibung ausgesetzte Schicht einen Volumenanteil von mindestens 50 % Kohlenstoffasern enthält. Bevorzugt liegt der Massenanteil von Siliciumcarbid in dem Material des erfindungsgemäßen Bremsbelags bei mindestens 10 %, besonders bevorzugt liegt dieser Massenanteil im Bereich von 12 bis 25 %.

Die Wärmeleitfähigkeit des Reibmaterials wird auch durch die Zusammensetzung der Matrix bestimmt, die überwiegend aus Si und SiC gebildet wird. Die Wärmeleitfähigkeit der reinen Substanzen beträgt für Silicium ca. 14 W/m · K und für SiC ca. 90 W/m · K. Daher sind erfindungsgemäß solche Matrixzusammensetzungen günstig, die einen für C/SiC-Werkstoffe vergleichsweise hohen Si-Gehalt, also eine niedrige Wärmeleitfähigkeit aufweisen, da hier der Effekt der Wärmeleitung durch die Fasern stärker zum Tragen kommt. Bevorzugt liegt der Massenanteil an Silicium in dem Material des erfindungsgemäßen Bremsbelags bei mindestens 10 % und besonders bevorzugt im Bereich von 12 bis 25 %. Dabei ist zu berücksichtigen, daß ein größerer Anteil von Silicium in der Reibschicht (der obersten Schicht des Bremsbelags) sowohl den Reibwert wie auch das Komfortverhalten ungünstig beeinflußt. Besonders bevorzugt weist die Reibschicht daher einen Siliciumgehalt auf, der geringer als der Gehalt an Siliciumcarbid ist.

Als weitere Bestandteile können dem Material des Bremsbelag Additive zugesetzt werden, die insbesondere zur Modifizierung des Reibwertes oder des Komfortverhaltens dienen, wobei deren Massenanteil im Material des Bremsbelags üblicherweise bei höchstens 5 % liegt. Die Additive sind bevorzugt bis zu dem bei dem bevorzugten Herstellungsprozeß durch Siliciumschmelzinfiltration thermisch stabil und büßen unter diesen Prozeßbedingungen ihre Funktionalität nicht ein. Bevorzugte Additive sind duktile Metalle, wie zum Beispiel Kupfer, oder Hartstoffpartikel, wie zum Beispiel Wolframcarbid, Titancarbid, Molybdänsilicid und Chromcarbid, oder Schmierstoffe wie zum Beispiel Mangansulfid.

Die Additive können auch nach der Herstellung des C/SiC-Körpers durch Infiltration mit geschmolzenem Silicium eingebracht werden, im Fall von Metallen wie Kupfer als Additiven beispielsweise durch eine weitere Infiltration mit diesen Metallen. Wird die Oberfläche des C/SiC-Körpers vor dieser weiteren Infiltration geätzt oder oxidiert, steigt die Benetzungsfähigkeit durch flüssige Metalle, die in den Reibkörper eindringen und auch zumindest teilweise mit den Stoffen in dem C/SiC-Körper reagieren können.

Additive können auch in Form von Stiften oder quer und/oder längs zur Reibrichtung verlaufenden bis zur Trägerplatte reichenden Stäben eingebracht werden, wobei diese Stifte und/oder Stäbe bevorzugt aus dem genannten Additivmaterial bestehen oder Mischungen des genannten Additivmaterials mit dem Material der Matrix, gegebenenfalls unter Zusatz von Kurzfasern (mit einer Länge unterhalb der oben genannten) bevorzugt aus Kohlenstoff enthalten.

Neben der verringerten Wärmeleitfähigkeit des Reibmaterials senkrecht zur Reibfläche ergibt sich als weiterer Vorteil der erfindungsgemäßen Faserorientierung eine hohe mechanische Stabilität in der Hauptbelastungsrichtung der Beläge, welche in der Ebene der Reibfläche liegt. Dagegen weist ein isotrop faserverstärktes Material, wie ein mit Bündeln von Kurzfasem verstärktes C/SiC, keine bevorzugte Verstärkung innerhalb der zur Reibfläche parallelen Ebene auf.

Der erfindungsgemäße Bremsbelag wird zur Verwendung in einem aus Bremsbelag und Bremsscheibe bestehenden Bremssystem üblicherweise auf einem metallischen Träger, der Belagsplatte, befestigt. Dazwischen läßt sich gegebenenfalls ein thermischer Isolator anordnen, bevorzugt aus keramischem Material.

Der Bremsbelag wird in bekannter Weise mit der Belagsplatte verbunden, nämlich mittels Kleber fixiert und/oder mechanisch verankert. In einer bevorzugten Ausführung der Erfindung wird der Belag durch mindestens zwei Verschraubungen mit der Belagsplatte verbunden. Die Verschraubung kann in dieser Ausführung auch als Verschleißindikator genutzt werden, indem die Schraubenköpfe nach dem bestimmungsgemäß vorgesehenen Abtrag des Reibmaterials in die Reibfläche gelangen und sich bei einem Bremsvorgang akustisch bemerkbar machen.

Die Belagsplatte zur Aufnahme des Bremsbelages ist bevorzugt so ausgestaltet, daß sie den Bremsbelag, der äußeren Belagskontur folgend, einfaßt. Dies geschieht durch eine Umrandung, die um ca. 0,5 bis 3 mm abgesetzt ist, wodurch der Bremsbelag einen zusätzlichen Halt bekommt.

Insbesondere die Kombination aus geringer thermischer Leitfähigkeit in der zur Reibfläche senkrechten Richtung und dem geringen Verschleiß des Reibmaterials ermöglicht den Einsatz vergleichsweise dünner Beläge. Dieser Vorteil läßt sich entweder zur Verringerung des Bauraums der Reibbelagskonstruktion, oder unter Beibehaltung des üblichen Bauraums für eine zusätzliche Lage eines thermischen Isolators nutzen. Dadurch können auch weitere Isolationsmaterialien hinter der Belagsplatte vorgesehen werden, ohne daß insgesamt mehr Bauraum benötigt wird. Als Isolationsmaterialien sind insbesondere keramische Materialien und/oder Fasermaterial auf der Basis von Silicium- und/oder Aluminium-Oxiden vorgesehen.

Die Erfindung betrifft weiter ein Verfahren zur Herstellung der Bremsbeläge, umfassend die folgenden wesentlichen Schritte:
a) Herstellen eines Fasergebildes aus im wesentlichen in einer Ebene angeordneten Kohlenstoffasern, die in Form von Einzelfasern, Faserbündeln oder Fasergamen vorliegen können, wobei die Fasern und/oder Faserbündel oder Fasergarne mit einem carbonisierbaren Binder gebunden sind
b) Formgebung und/oder Härtung des gebundenen Fasergebildes unter Druck und/oder Temperatur, gegebenenfalls gefolgt von einer Nachverdichtung mit carbonisierbaren Kohlenstoffprecursoren
c) Carbonisierung oder Graphitierung des gebundenen gehärteten Fasergebildes zur Herstellung eines Formkörpers aus mit Kohlenstoffasern verstärktem Kohlenstoff (C/C)
d) mindestens einmaliges Nachverdichten des C/C-Formkörpers mit pyrolytischem Kohlenstoff, der entweder durch Flüssigphaseninfiltration und nachfolgende Carbonisierung mit carbonisierbaren Kohlenstoffprecursoren oder durch Gasphaseninfiltration mit Kohlenstoff gebildet wird
e) Infiltrieren des nachverdichteten C/C-Formkörpers mit einer Silicium-Schmelze und partielle Reaktion des Silicium mit mindestens einem Teil des Kohlenstoffs in dem Formkörper zu Siliciumcarbid, so daß eine Verbundkeramik mit in einer Matrix aus SiC, Si und C eingebetteten Kohlenstoffasern entsteht (C/SiC).

Als "Kohlenstoffprecursoren" ("carbon precursors") werden hier solche Stoffe bezeichnet, die beim Erhitzen unter Ausschluß von Oxidationsmitteln unter Bildung eines Rückstandes zerfallen, der im wesentlichen (zu mehr als 50 % seiner Masse) aus Kohlenstoff besteht. Zu den zur Nachverdichtung des Kohlenstoffkörpers in den Schritten b) oder d) eingesetzten carbonisierbaren Kohlenstoffprecursoren, aus denen pyrolytischer Kohlenstoff gebildet wird, zählen insbesondere organische Polymere, bevorzugt Peche oder Phenolharze, aber auch metallorganische Polymere, insbesondere siliciumorganische Polymere, wie Polysiloxane oder Polysilane. Die Carbonisierung erfolgt nach den bekannten Verfahren, bevorzugt aber bei Temperaturen im Bereich von 750 bis 950 °C im Stickstoffstrom.

Das Fasergebilde wird bevorzugt nach dem bekannten Prepreg-Verfahren hergestellt, bei dem mehrere mit Bindemittel imprägnierte Faserlagen aufeinandergestapelt werden. Als Bindemittel können beispielsweise Phenolharze eingesetzt werden.

Die Zugabe von Additiven erfolgt bevorzugt in den Schritten a) oder b).

Bei der Schmelzinfiltration des C/C-Körpers im Schritt e) wird üblicherweise eine Schmelze aus technisch reinem Silicium verwendet. Ebenso ist es aber auch möglich, der Schmelze geringe Mengen weiterer Metalle zuzusetzen, wie beispielsweise Titan, Chrom, Eisen, Kupfer und Molybdän, um die Reib- oder Verschleißeigenschaften zu modifizieren. Silicium wird hier auch als Metall bezeichnet.

Das erfindungsgemäße Herstellungsverfahren hat den weiteren Vorteil, daß sich unter anderem der Reibkoeffizient in einfacher Weise über die Dichte und den Gehalt an freiem Kohlenstoff des C/C-Vorkörpers einstellen läßt, da dieser Gehalt an freiem Kohlenstoff im wesentlichen die Zusammensetzung der durch die Infiltration gebildeten Matrix bestimmt, insbesondere das Verhältnis der Massen von Silicium zu Siliciumcarbid. Dabei führen geringe Dichten des C/C-Vorkörpers mit entsprechend geringen Gehalten an freiem Kohlenstoff zu einem hohen Verhältnis der Massen von Si zu SiC.

Als bevorzugte Reibpartner des erfindungsgemäßen Bremsbelags werden Körper aus keramischen Werkstoffen eingesetzt. Hierbei sind insbesondere metall-keramische und faserverstärkte keramische Verbundwerkstoffe von Bedeutung.

Die für den erfindungsgemäßen Bremsbelag besonders bevorzugten Reibpartner sind Körper, die zumindest eine Reibschicht aufweisen, die im wesentlichen aus C/SiC besteht, wobei insbesondere kurzfaserverstärktes C/SiC bevorzugt ist. Verfahren zur Herstellung von Körpern mit derartigen kurzfaserverstärkten C/SiC-Reibschichten, insbesondere C/SiC-Bremsscheiben, sind beispielsweise aus der DE-A 197 10 105 bekannt und umfassen unter anderem die folgenden Schritte:
a) Herstellen einer Mischung aus kurzgeschnittenen kohlenstoffhaltigen Fasern- oder Faserbündeln, die mit einer Beschichtung überzogen worden sein können, einerseits und Füllmitteln und/oder Bindemitteln wie beispielsweise Harz und/oder Pech andererseits,
b) Formgebung der Mischung unter Druck und/oder Temperatur
c) Pyrolyse oder Graphitierung zur Herstellung eines Formkörpers, insbesondere eines Formkörpers aus mit Kohlenstoffasern verstärktem Kohlenstoff (C/C),
d) Infiltrieren des Formkörpers mit einer Silicium-Schmelze und partielle Reaktion des Kohlenstoffs in dem Formkörper zu SiC, so daß eine Verbundkeramik mit in einer Matrix aus SiC, Si und C eingebetteten kohlenstoffhaltigen Fasern entsteht (C/SiC).

Die Matrix kann abweichend von diesem Verfahren des Schrittes d) auch durch eine Gasphaseninfiltration (CVD, "Chemical Vapour Deposition", oder CVI, "Chemical Vapour Infiltration") unter Bildung von SiC oder durch die Pyrolyse von siliciumhaltigen präkeramischen Polymeren erzeugt werden, wobei ebenfalls ein Formkörper aus einer Verbundkeramik mit in einer Matrix aus SiC, Si und C eingebetteten kohlenstoffhaltigen Fasern (C/SiC) gebildet wird.

Der Massenanteil an Siliciumcarbid in der Matrix des als Reibpartner für die Bremsbeläge bevorzugt eingesetzten C/SiC-Werkstoffs liegt bevorzugt bei mindestens 50 %. Besonders bevorzugt weist der Reibpartner zumindest in der dem Bremsbelag zugewandten Schicht einen Massenanteil von Siliciumcarbid von mindestens 65 % und insbesondere von 80 bis 100 % auf.

Auch andere mit Kohlenstoffasern verstärkte carbidische Keramiken eignen sich als Reibpartner für den erfindungsgemäßen Bremsbelag.

Eine der bevorzugten Anwendungen des Reibmaterials liegt in deren Verwendung als Bremsbelag in Bremssystemen mit Bremsscheiben aus C/SiC, insbesondere mit innenbelüfteten C/SiC-Bremsscheiben. Die erfindungsgemäßen Bremsbeläge können aber auch in Kombination mit Bremsscheiben aus mit Kohlenstoffasern verstärktem Kohlenstoff ("carbon fibre reinforced carbon", CFC oder CFRC) eingesetzt werden.

Erfindungsgemäße Beläge lassen sich auch in anderen Reibpaarungen, beispielsweise in Reibungskupplungen, mit Vorteil verwenden.

## Patentansprüche

1. Mit Kohlenstoffasern verstärkter keramischer Bremsbelag mit einer Matrix, die im wesentlichen aus Siliciumcarbid, sowie Silicium und/oder Kohlenstoff aufgebaut ist, **dadurch gekennzeichnet, daß** als Verstärkungsfasern Langfasern mit einer mittleren Länge von mindestens 10 mm eingesetzt werden, die in der Ebene parallel zur Reibfläche ausgerichtet sind.

2. Bremsbelag nach Anspruch 1, **dadurch gekennzeichnet, daß** die Wärmeleitfähigkeit senkrecht zur Reibfläche bei höchstens 50 % der Wärmeleitfähigkeit parallel zur Reibfläche liegt.

3. Bremsbelag nach Anspruch 1, **dadurch gekennzeichnet, daß** die Verstärkungsfasern in Form von mindestens einer Lage von unidirektionalen oder multidirektionalen Gelegen, Matten, Geweben oder Geflechten vorliegen, die im Falle von mehreren Lagen übereinandergestapelt sind.

4. Bremsbelag nach Anspruch 1, **dadurch gekennzeichnet, daß** die Verstärkungsfasern in Form von Bündeln vorliegen, wobei ein Bündel aus mindestens 100 Einzelfasern besteht.

5. Bremsbelag nach Anspruch 3, **dadurch gekennzeichnet, daß** mindestens 5 Lagen von Verstärkungsfasern übereinandergestapelt sind.

6. Bremsbelag nach Anspruch 1, **dadurch gekennzeichnet, daß** die Wärmeleitfähigkeit parallel zur Reibfläche des Bremsbelags mindestens 21 W/m · K beträgt.

7. Bremsbelag nach Anspruch 1, **dadurch gekennzeichnet, daß** die Wärmeleitfähigkeit senkrecht zur Reibfläche des Bremsbelags höchstens 19 W/m · K beträgt.

8. Bremsbelag nach Anspruch 1, **dadurch gekennzeichnet, daß** der Massenanteil von Siliciumcarbid in dem Bremsbelag mindestens 10 % beträgt.

9. Bremsbelag nach Anspruch 1, **dadurch gekennzeichnet, daß** der Massenanteil von Silicium in dem Bremsbelag bei mindestens 10 % liegt.

10. Kombination von einer Belagsplatte und einem Bremsbelag nach Anspruch 1, **dadurch gekennzeichnet, daß** der Bremsbelag durch mindestens zwei Verschraubungen mit der Belagsplatte verbunden ist.

11. Kombination von einer Belagsplatte und einem Bremsbelag nach Anspruch 1, **dadurch gekennzeichnet, daß** der Bremsbelag durch Verkleben mit der Belagsplatte verbunden ist.

12. Verfahren zur Herstellung von einem Bremsbelag nach Anspruch 1, umfassend die folgenden Schritte:
a) Herstellen eines Fasergebildes aus im wesentlichen in einer Ebene angeordneten Kohlenstoffasern, die in Form von Einzelfasern, Faserbündeln oder Fasergarnen vorliegen können, wobei die Fasern und/oder Faserbündel oder Fasergarne mit einem carbonisierbaren Binder gebunden sind,
b) Formgebung und/oder Härtung des gebundenen Fasergebildes unter Druck und/oder Temperatur, gegebenenfalls gefolgt von einer Nachverdichtung mit carbonisierbaren Kohlenstoffprecursoren,
c) Carbonisierung oder Graphitierung des gebundenen gehärteten Fasergebildes zur Herstellung eines Formkörpers aus mit Kohlenstoffasern verstärktem Kohlenstoff (C/C),
d) mindestens einmaliges Nachverdichten des C/C-Formkörpers mit pyrolytischem Kohlenstoff, der entweder durch Flüssigphaseninfiltration und nachfolgende Carbonisierung mit carbonisierbaren Kohlenstoffprecursoren oder durch Gasphaseninfiltration mit Kohlenstoff gebildet wird, und
e) Infiltrieren des nachverdichteten C/C-Formkörpers mit einer Silicium-Schmelze und partielle Reaktion des Silicium mit mindestens einem Teil des Kohlenstoffs in dem Formkörper zu Siliciumcarbid, so daß eine Verbundkeramik mit in einer Matrix aus SiC, Si und C eingebetteten Kohlenstoffasern entsteht (C/SiC).

13. Verfahren nach Anspruch 12, **dadurch gekennzeichnet, daß** die Siliciumschmelze im Schritt e) weitere Metalle ausgewählt aus Titan, Eisen, Chrom, Kupfer und Molybdän enthält.

14. Verwendung eines Bremsbelags nach Anspruch 1 in Kombination mit Bremsscheiben aus C/SiC.

15. Verwendung eines Bremsbelag nach Anspruch 1 in Kombination mit Bremsscheiben aus CFC.

16. Verwendung eines Belags gemäß Anspruch 1 als Reibbelag in einer Reibkupplung.

## Claims

1. A ceramic brake lining which is reinforced with carbon fibers and has a matrix which consists essentially of silicon carbide together with silicon and/or carbon, wherein the reinforcing fibers used are long fibers having a mean length of at least 10 mm which are aligned in the plane parallel to the friction surface.

2. A brake lining as claimed in claim 1, wherein the thermal conductivity perpendicular to the friction surface is not more than 50 % of the thermal conductivity parallel to the friction surface.

3. A brake lining as claimed in claim 1, wherein the reinforcing fibers are present in the form of at least one slayer of unidirectional or multidirectional lay-ups, mats, woven fabrics or braided materials, which in the case of a plurality of layers are stacked one above the other.

4. A brake lining as claimed in claim 1, wherein the reinforcing fibers are present in the form of bundles each comprising at least 100 individual fibers.

5. A brake lining as claimed in claim 3, wherein at least five layers of reinforcing fibers are stacked one above the other.

6. A brake lining as claimed in claim 1, wherein the thermal conductivity parallel to the friction surface of the brake lining is at least 21 W/m·K.

7. A brake lining as claimed in claim 1, wherein the thermal conductivity perpendicular to the friction surface of the brake lining is not more than 19 W/m·K.

8. A brake lining as claimed in claim 1, wherein the mass fraction of silicon carbide in the brake lining is at least 10 %.

9. A brake lining as claimed in claim 1, wherein the mass fraction of silicon in the brake lining is at least 10 %.

10. A combination of a lining plate and a brake lining as claimed in claim 1, wherein the brake lining is joined to the lining plate by means of at least two screws.

11. A combination of a lining plate and a brake lining as claimed in claim 1, wherein the brake lining is joined to the lining plate by adhesive bonding.

12. A process four producing a brake lining as claimed in claim 1, which comprises the following steps:
a) production of a fiber construction of carbon fibers arranged essentially in a plane, with the fibers being able to be present in the form of individual fibers, fiber bundles or fiber yarns and the fibers and/or fiber bundles or fiber yarns being bound by a carbonizable binder,
b) shaping and/or curing of the bound fiber construction under pressure and/or at elevated temperature, if desired followed by further densification by means of carbonizable carbon precursors,
c) carbonization or graphitization of the bound cured fiber construction to produce a shaped body comprising carbon reinforced with carbon fibers (C/C),
d) at least one further densification of the C/C shaped body by means of pyrolytic carbon formed either by liquid-phase infiltration with carbonizable carbon precursors and subsequent carbonization or by gas-phase infiltration with carbon, and
e) infiltration of the further densified C/C shaped body with a silicon melt and partial reaction of the silicon with at least part of the carbon in the shaped body to form silicon carbide, so as to give a composite ceramic comprising carbon fibers embedded in a matrix comprising SiC, Si and C (C/SiC).

13. The process as claimed in claim 12, wherein the silicon melt in step e) further comprises additional metals selected from among titanium, iron, chromium, copper and molybdenum.

14. The use of a brake lining as claimed in claim 1 in combination with brake discs made of C/SiC.

15. The use of a brake lining as claimed in claim 1 in combination with brake discs made of CFC.

16. The use of a lining as claimed in claim 1 as friction lining in a friction clutch.

## Revendications

1. Garniture de frein en céramique armée de fibres de carbone, comprenant une matrice, qui est composée pour l'essentiel de carbure de silicium et de silicium et/ou de carbone,
**caractérisée en ce que**
les fibres d'armature utilisées sont des fibres longues ayant une longueur moyenne d'au moins 10 mm, qui sont orientées dans un plan parallèle à la surface de frottement.

2. Garniture de frein selon la revendication 1,
**caractérisée en ce que**
la conductibilité thermique, perpendiculairement à la surface de frottement, ne dépasse pas 50 % de la conductibilité thermique parallèlement à la surface de frottement.

3. Garniture de frein selon la revendication 1,
**caractérisée en ce que**
les fibres d'armature sont présentes sous forme d'au moins une couche de grilles, de nattes, de tissus ou de treillis unidirectionnels ou multidirectionnels qui, dans le cas de plusieurs couches, sont superposés les uns aux autres.

4. Garniture de frein selon la revendication 1,
**caractérisée en ce que**
les fibres d'armature sont présentes sous forme de faisceaux, un faisceau étant composé d'au moins 100 fibres individuelles.

5. Garniture de frein selon la revendication 3,
**caractérisée en ce que**
au moins 5 couches de fibres d'armature sont superposées les unes aux autres.

6. Garniture de frein selon la revendication 1,
**caractérisée en ce que**
la conductibilité thermique parallèle à la surface de frottement de la garniture de frein est d'au moins 21 W/m · K.

7. Garniture de frein selon la revendication 1,
**caractérisée en ce que**
la conductibilité thermique perpendiculairement à la surface de frottement de la garniture de frein ne dépasse pas 19 W/m - K.

8. Garniture de frein selon la revendication 1,
**caractérisée en ce que**
le rapport en masse de carbure de silicium dans la garniture de frein est d'au moins 10 %.

9. Garniture de frein selon la revendication 1,
**caractérisée en ce que**
le rapport en masse de silicium dans la garniture de frein est d'au moins 10 %.

10. Combinaison d'une plaque porte-garniture et d'une garniture de frein selon la revendication 1, **caractérisée en ce que**
la garniture de frein est reliée à la plaque porte-garniture par l'intermédiaire d'au moins deux assemblages à vis.

11. Combinaison d'une plaque porte-garniture et d'une garniture de frein selon la revendication 1, **caractérisée en ce que**
la garniture de frein est reliée à la plaque porte-garniture par collage.

12. Procédé de fabrication d'une garniture de frein selon la revendication 1, comprenant les étapes suivantes :
a. fabrication d'une formation de fibres à partir de fibres de carbone disposées essentiellement dans un plan, les fibres pouvant être présentes sous forme de fibres individuelles, de faisceaux de fibres, ou de fils, les fibres et/ou faisceaux de fibres ou fils étant liés au moyen d'un liant pouvant être carbonisé,
b. façonnage et/ou cuisson de la formation de fibres liées sous pression et/ou à température, le cas échéant suivis d'une post-compression en présence de précurseurs de carbone pouvant être carbonisés,
c. carbonisation ou graphitage de la formation de fibres liée, durcie, pour fabriquer un corps de forme composé de carbone armé de fibres de carbone (C/C),
d. au moins une post-compression du corps de forme C/C en présence de carbone pyrolytique produit soit par infiltration en phase liquide, suivie d'une carbonisation en présence de précurseurs de carbone pouvant être carbonisés, soit par infiltration en phase gazeuse en présence de carbone, et
e. infiltration du corps de forme C/C post-comprimé avec un bain de fusion de silicium, et réaction partielle du silicium avec au moins une partie du carbone dans le corps de forme, pour former du carbure de silicium, de façon à créer une matière céramique composite avec des fibres de carbone (C/SiC) encastrées dans une matrice de SiC, Si, et de C.

13. Procédé selon la revendication 12,
**caractérisé en ce que**
le bain de fusion de silicium, à l'étape e), comprend d'autres métaux choisis parmi les titane, fer, chrome, cuivre et molybdène.

14. Utilisation d'une garniture de frein selon la revendication 1 en combinaison avec des disques de freins en C/SiC.

15. Utilisation d'une garniture de frein selon la revendication 1 en combinaison avec des disques de freins en CFC.

16. Utilisation d'une garniture selon la revendication 1 comme garniture de friction dans un embrayage à friction.
